# EUROPEAN PATENT APPLICATION

(11) **EP 2 918 782 A1**
(43) Date of publication of application: **16.09.2015**
(21) Application number: 15158595.7
(22) Date of filing: 11.03.2015
(51) Int. Cl.: F01D 5/18

(54) **Component with cooling hole having helical groove and corresponding gas turbine engine**

(30) Priority: 11.03.2014 US 201461950984 P
(71) Applicant: UNITED TECHNOLOGIES CORPORATION, Hartford, CT 06101 (US)
(72) Inventor: GAUTSCHI, Steven Bruce, Naugatuck, CT Connecticut 06770 (US); QUACH, San, East Hartford, CT Connecticut 06108 (US)
(74) Representative: Leckey, David Herbert

(57) **Abstract**

One exemplary embodiment of this disclosure relates to a component (60) for a gas turbine engine (20). The component (60) includes a cooling hole (84) having a wall (88) with at least one helical groove (90) formed in the wall (88).

## Description

### BACKGROUND

Gas turbine engines typically include a compressor section, a combustor section, and a turbine section. During operation, air is pressurized in the compressor section, and mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating arrays of rotating blades and stationary vanes that extend into a core airflow path of the gas turbine engine. In some example engine components, such as turbine blades, a cooling fluid is routed out of the component via a plurality of cooling holes. The fluid creates a film which protects the exterior surface of the component from the relatively hot gases flowing within the core airflow path.

### SUMMARY

One exemplary embodiment of this disclosure relates to a component for a gas turbine engine. The component includes a cooling hole having a wall with at least one helical groove formed in the wall.

In a further embodiment of the above, the cooling hole is provided about a cooling hole axis, and wherein the at least one helical groove curves about the cooling hole axis as the at least one helical groove translates along the cooling hole axis.

In a further embodiment of any of the above, the cooling hole axis is inclined at an acute angle relative a central longitudinal axis of the engine.

In a further embodiment of any of the above, the the wall includes a plurality of helical grooves.

In a further embodiment of any of the above, the component includes a plurality of cooling holes, each of the plurality of cooling holes having a wall with at least one helical groove.

In a further embodiment of any of the above, the component includes an internal cavity, the cooling hole in communication with the internal cavity.

In a further embodiment of any of the above, the internal cavity is in communication with a source of cooling fluid.

In a further embodiment of any of the above, the component is one of a rotor blade, a stator vane, and a blade outer air seal.

In a further embodiment of any of the above, the component is a rotor blade, and wherein the cooling hole is provided in an airfoil section of the rotor blade.

In a further embodiment of any of the above, the cooling hole is a showerhead cooling hole provided in a leading edge of the rotor blade.

Another exemplary embodiment of this disclosure relates to a gas turbine engine. The engine includes a compressor section, a combustor section, and a turbine section. The engine further includes a component provided within one of the compressor section, the combustor section, and the turbine section. The component includes a cooling hole having a wall with at least one helical groove formed in the wall.

In a further embodiment of any of the above, the cooling hole is provided about a cooling hole axis, and the at least one helical groove curves about the cooling hole axis as the at least one helical groove translates along the cooling hole axis.

In a further embodiment of any of the above, the cooling hole axis is inclined at an acute angle relative a central longitudinal axis of the engine.

In a further embodiment of any of the above, the component includes a plurality of cooling holes, each of the plurality of cooling holes having a wall with at least one helical groove.

In a further embodiment of any of the above, the component includes an internal cavity, the cooling hole in communication with the internal cavity.

In a further embodiment of any of the above, the internal cavity is in communication with a source of cooling fluid.

In a further embodiment of any of the above, the component is one of a rotor blade, a stator vane, and a blade outer air seal.

In a further embodiment of any of the above, the component is a rotor blade, and wherein the cooling hole is a showerhead cooling hole provided in a leading edge of the rotor blade.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

The drawings can be briefly described as follows:
Figure 1 schematically illustrates an example gas turbine engine.
Figure 2 is a perspective view of an example gas turbine engine component.
Figure 3 is a cross-sectional view taken along line 3-3 from Figure 2.
Figure 4 is a cross-sectional view taken along line 4-4 from Figure 3.
Figure 5 is a view along an example cooling hole.

### DETAILED DESCRIPTION

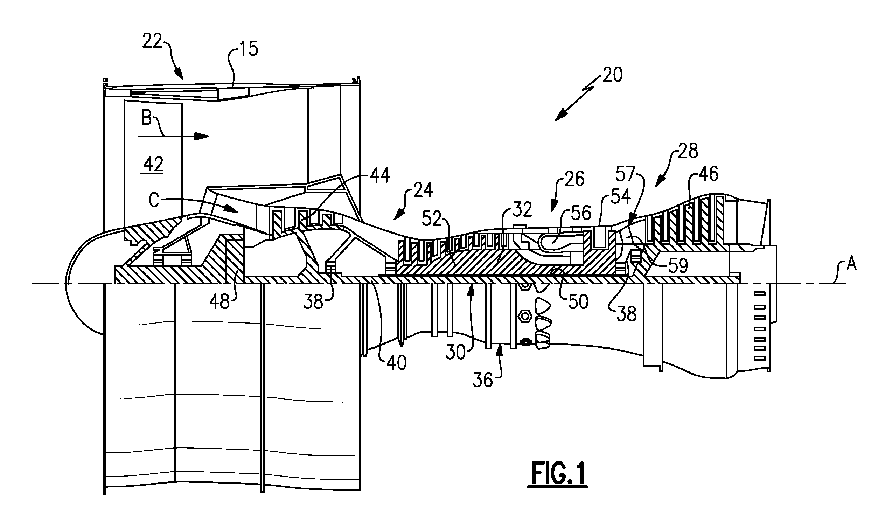

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core airflow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

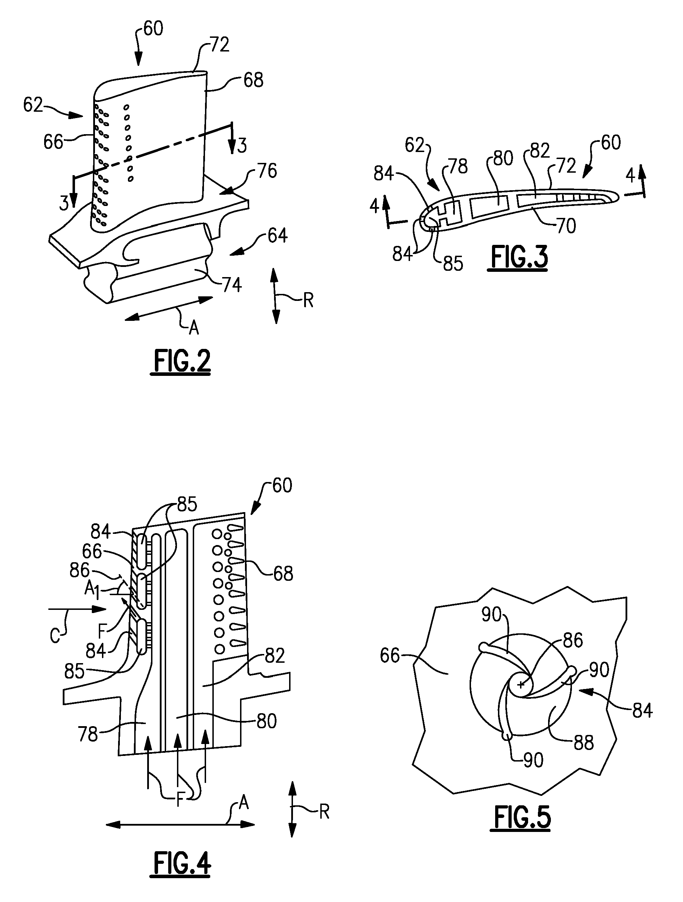

Figure 2 is a perspective view of an example engine component 60. In this example, the engine component 60 is a rotor blade provided within the turbine section 28 of the engine 20 of Figure 1. It should be understood, however, that this disclosure extends to other engine components, such as stator vanes and blade outer air seals (BOAS). Further, while a turbine blade is illustrated, this disclosure applies to components within other sections of the engine 20.

The engine component 60 includes an airfoil section 62 and an attachment section 64. The airfoil section 62 includes a leading edge 66, a trailing edge 68, and opposed pressure and suction sidewalls 70, 72 extending from the leading edge 66 to the trailing edge 68. The attachment section 64 in this example includes a fir tree root 74, although other types of attachments, such as dovetails, come within the scope of this disclosure. Further, in this example, the component includes a platform 76 between the airfoil section 62 and the attachment section 64.

Figure 3 is a cross-sectional view taken along line 3-3 from Figure 2. As shown in Figure 3, the engine component 60 includes three internal cavities 78, 80, 82 that route fluid within the airfoil section 62. While three cavities 78, 80, 82 are shown, the engine component 60 could include any number of cavities. As will be explained below, the internal cavities 78, 80, 82 communicate with a plurality of cooling holes (e.g., the cooling holes 84), which are arranged to create a film of the fluid F (Figure 4) for protecting the airfoil section 62 from the hot combustion gases within the core airflow path C.

Figure 4 is a cross-sectional view of the engine component 60, taken along line 4-4 from Figure 3. The leading edge 66 of the airfoil section 62 is provided with a plurality of cooling holes 84. In this example, the cooling holes 84 are known as showerhead cooling holes. The engine component 60 may additionally, or alternatively, include cooling holes in the trailing edge 68, the pressure sidewall 70, the suction sidewall 72, and the platform 76, as examples.

In this example, the cooling holes 84 are provided with a flow of fluid F via the front-most cavity 78, and a plurality of pockets 85. Each of the pockets 85 distributes the fluid F to a plurality of cooling holes 84. The pockets 85 also internally cool the airfoil section 62. While three pockets 85 are illustrated, there can be different numbers of pockets. Further, the pockets 85 are not required.

In one example, the cooling holes 84 are formed by investment casting. In another example, the cooling holes 84 are formed from additive manufacturing. The cooling holes 84 could also be formed using electron discharge machining (EDM). While these specific techniques are mentioned, it should be understood that the cooling holes 84 may be formed in other ways.

In the illustrated example, the cooling holes 84 are arranged to direct a flow of fluid F out the airfoil section 62 to create a relatively cool film of the fluid F adjacent the leading edge 66. The film of fluid F protects the airfoil section 62 from the relatively hot gases within the core airflow path C. The fluid F is sourced from another location within the engine such as compressor bleed air, for example.

In this example, the cooling holes 84 extend along an axis 86 inclined at an angle A₁ relative to the engine central longitudinal axis A. In one example, the angle A₁ is an acute angle.

Figure 5 illustrates, from a fore perspective (i.e., looking into the cooling hole 84 from a location forward of the leading edge 66), a view of an example cooling hole 84 along the axis 86. The example cooling hole 84 includes a wall 88 and at least one helical groove 90 formed in the wall 88. That is, the wall 88 is essentially "rifled," such that the at least one helical groove 90 extends radially into the wall 88. As used herein, the term helical is used consistent with its ordinary meaning. That is, the grooves 90 are "helical" because they curve about the axis 86 as they translate along the axis 86.

In this example, three helical grooves 90 are illustrated. It should be understood, however, that this disclosure extends to cooling holes that have one or more helical grooves 90. Further, while in this example the helical groove 90 has a rounded contour, it should be understood that the helical grooves 90 could have different contours.

During operation of the engine 20, fluid F travels along the cooling hole 84. A portion of the fluid F within the cooling hole 84 flows along the helical grooves 90. This portion of the fluid F begins to swirl about the axis 86, and is ejected from the cooling hole 84 with a rotational component. The rotational component of the fluid F causes the fluid F to become locally attached to the surface of the airfoil section 62 adjacent the cooling hole 84. This increases the film coverage of the fluid F, which, in turn, better insulates the airfoil section 62 from the fluid within the core airflow path C.

While a benefit of the cooling hole 84 is that it allows ejected fluid F to locally attach to the exterior surface of the engine component 60, the helical grooves 90 may be incorporated into an internal cooling holes, such as the cavities 78, 80, 82. In this case, the helical grooves 90 help induce vorticity within the internal cooling holes, and also increase flow attachment, enhance flow direction, and reduce pressure losses around bends.

It should be understood that terms such as "fore," "aft," "axial," "radial," and "circumferential" are used above with reference to the normal operational attitude of the engine 20. Further, these terms have been used herein for purposes of explanation, and should not be considered otherwise limiting. Terms such as "generally," "substantially," and "about" are not intended to be boundaryless terms, and should be interpreted consistent with the way one skilled in the art would interpret the term.

Although the different examples have the specific components shown in the illustrations, embodiments of this disclosure are not limited to those particular combinations. It is possible to use some of the components or features from one of the examples in combination with features or components from another one of the examples.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. A component (60) for a gas turbine engine (20), comprising:
a cooling hole (84) having a wall (88) with at least one helical groove (90) formed in the wall (88).

2. The component as recited in claim 1, wherein the cooling hole (84) is provided about a cooling hole axis (86), and wherein the at least one helical groove (90) curves about the cooling hole axis (86) as the at least one helical groove (90) translates along the cooling hole axis (86).

3. The component as recited in claim 2, wherein the cooling hole axis (86) is inclined at an acute angle (A₁) relative a central longitudinal axis (A) of the engine (20).

4. The component as recited in claim 1, 2 or 3, wherein the wall (88) includes a plurality of helical grooves (90).

5. The component as recited in any preceding claim, wherein the component (60) includes a plurality of cooling holes (84), each of the plurality of cooling holes (84) having a wall (88) with at least one helical groove (90).

6. The component as recited in any preceding claim, including an internal cavity (78, 80, 82), the cooling hole (84) in communication with the internal cavity (78, 80, 82).

7. The component as recited in claim 6, wherein the internal cavity (79, 80, 82) is in communication with a source of cooling fluid.

8. The component as recited in any preceding claim, wherein the component (60) is one of a rotor blade, a stator vane, and a blade outer air seal.

9. The component as recited in claim 8, wherein the component (60) is a rotor blade, and wherein the cooling hole (84) is provided in an airfoil section (62) of the rotor blade.

10. The component as recited in claim 9, wherein the cooling hole (84) is a showerhead cooling hole provided in a leading edge (66) of the rotor blade (60).

11. A gas turbine engine (20), comprising:
a compressor section (24), a combustor section (26), and a turbine section (28); and
a component (60) as set forth in any preceding claim provided within one of the compressor section (24), the combustor section (26), and the turbine section (28).
